# EUROPEAN PATENT APPLICATION

(11) **EP 1 215 610 A2**
(43) Date of publication of application: **19.06.2002**
(21) Application number: 01402826.0
(22) Date of filing: 31.10.2001
(51) Int. Cl.: G06F 17/60, G06F 17/30

(54) **Web pages as a memory device**

(30) Priority: 08.11.2000 US 708065
(71) Applicant: FRANCE TELECOM, 75015 Paris (FR)
(72) Inventor: Ramus, Catherine, 94400 Vitry sur Seine (FR); Weibel, Xavier, San Francisco, CA 94114 (US)
(74) Representative: Lemoyne, Didier

(57) **Abstract**

A method, system and computer program product for updating a personalized web page with information corresponding to at least one of a product and service identified by a unique identifier. Using a remotely located computing device, a user requests information and is given an opportunity to purchase (or lease) the product or service represented by the information. In order to facilitate reminding the user about the product or service, the user's personalized web page is updated. Thus, the user can make either immediate or deferred purchases based on a unique identifier.

## Description

### BACKGROUND OF THE INVENTION

### Field of the Invention

The present invention is directed to a method and system for using computer-generated Web pages as a memory device, and more particularly to a method and system for tracking the selection of real-life events and/or objects such that at least one personal Web-page is updated via computer to reflect the selection.

### Discussion of the Background

One of the original uses of the World Wide Web ("the Web") was as a method for sharing static information (e.g., test results) between remotely located parties. In such an implementation, a Web server simply opened a file to be displayed remotely and passed the contents of that file through an open socket connection to a (remotely-located) user.

Fueled by improvements such as the advent of dynamic database queries on Web-servers, the Web quickly spread to uses that involved dynamic page generation. One such use is in stock portfolio tracking where a user's individual stock names and their quantities are stored in a database and a substantially real-time stock price query coordinates the name, quantities and prices to show a portfolio's present worth. As an outgrowth of such tracking systems, companies began to integrate the portfolio tracking with the actual on-line trading of stocks (or other securities). Accordingly, if a stock was bought or sold, the portfolio would automatically reflect the results of the transaction. (Information on providing Web services is provided in the following references which are incorporated herein by reference: (1) Visual Studio Core Reference Set, by Microsoft Press, (2) Visual InterDev 6.0: Web Technologies Reference, by Microsoft Press, (3) Professional Active Server Pages 2.0 by Francis et al., published by WROX Press Ltd., (4) Oracle PL/SQL Programming by Scott Urman, Published: March 1996, (5) Hitchhikers Guide to Visual Basic and SQL Server: with CD-ROM, by William Vaughn, Published: May 1997, (6) Using Microsoft SQL Server 6.5 (Special Edition) by Stephen Wynkoop, Published: March 1997, and (7) Advanced PowerBuilder 6 Techniques by Ramesh Chandak.)

Another example of dynamic page generation is in on-line ordering in which either an inventory is checked in substantially real-time or a location of a consumer's shipped package is tracked. Both such uses, however, keep the results of the query as part of the web site of engine that performed the search.

### SUMMARY OF THE INVENTION

In addition to the uses of the Internet described above (and other similar uses), the Internet provides the opportunity for merchants to reinforce the buying (or leasing) impulse in consumers by increasing the exposure of consumers to information about a particular product. In addition to being able to provide a consumer with direct access to ordering when a consumer is first introduced to a product (e.g., in a store, in an e-mail, or on a Web site), merchants can follow-up with additional information by updating a consumer's web page with information corresponding to an item that the consumer was exposed to but did not buy.

Accordingly, it is a first object of the present invention to provide a consumer with a personalized web page that is divided into subject areas that are identifiable to or by a computer.

It is a second object of the present invention to provide a consumer with a reinforced exposure to a product or service by updating the consumer's web page with information on that product or service.

It is a third object of the present invention to capture substantially real-time information about an event occurring at a particular location at a particular time such that additional information corresponding to that event can be added to a consumer's web page.

Each of the above objects provides a useful function in its own right. It is therefore to be understood that not all of the objects of the invention must be practiced by every implementation of the present invention. Instead, the present invention can address any one or a combination of the above objects and still fall within the scope of the claims below.

### BRIEF DESCRIPTION OF THE DRAWINGS

A more complete appreciation of the present invention, and many of the attendant advantages thereof, will be readily obtained as the same becomes better understood by reference to the following detailed description when considered in connection with the accompanying drawings, wherein:
Figure 1 is a schematic diagram of a computer for performing at least one of information viewing and information gathering;
Figure 2 is process diagram of how a user configures a personal web page to reflect products and services on which the user has recently requested information;
Figure 3 is a captured image of a login screen used to authenticate a user to a web server;
Figure 4 is a captured image of a database structure for correlating user names to password and web page layouts;
Figure 5 is a captured image of a layout control web interface for modifying the positions of the information tracked by the web server on behalf of a user;
Figure 6 is an exemplary portable computing device for logging into a personal web page server to receive information about products and to remotely update a user's web page;
Figure 7A is a process diagram showing how the request of information updates a user's web page;
Figure 7B is an exemplary database structure for storing information about products based on Universal Product Code (UPC) numbers;
Figure 7C is a data flow diagram showing how the request of information updates a user's web page;
Figure 8 is the exemplary portable computing device of Figure 6 showing an interface for entering UPC numbers;
Figures 9A and 9B are phone and web interfaces, respectively, for showing information retrieved from a database about a particular product or service specified by a UPC number;
Figures 10A and 10B are phone and web interfaces, respectively, for ordering a particular product or service specified by a UPC number;
Figures 11A and 11B are phone and web interfaces, respectively, for confirming an order of a particular product or service specified by a UPC number;
Figure 12 is a phone interface for selecting information about a song currently being played on a specified radio station;
Figures 13A and 13B are phone and web interfaces, respectively, for displaying information about a particular song played by a specified radio station;

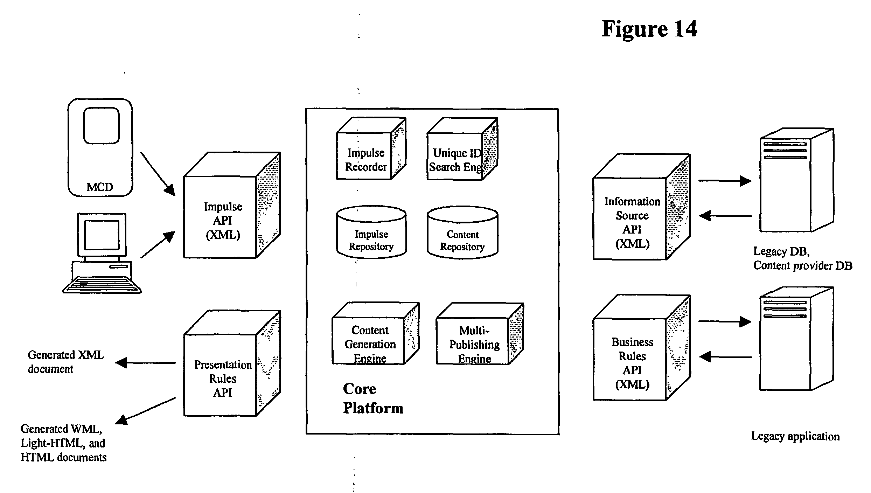

Figure 14 is a schematic illustration of a generalized system for generating personalized information for display on a mobile device;
Figure 15 is a schematic illustration of a mobile system for collecting information using a mobile device;
Figure 16 is a schematic illustration of a system for viewing information collected using a mobile device;
Figure 17 is an exemplary snapshot of a list of products for which information was recently requested;
Figure 18 is an illustration of exemplary uses of Z-services according to the present invention; and
Figure 19 is an illustration of message flow within an exemplary embodiment of a portion of the present invention.

### DETAILED DESCRIPTION OF THE PREFERRED EMBODIMENTS

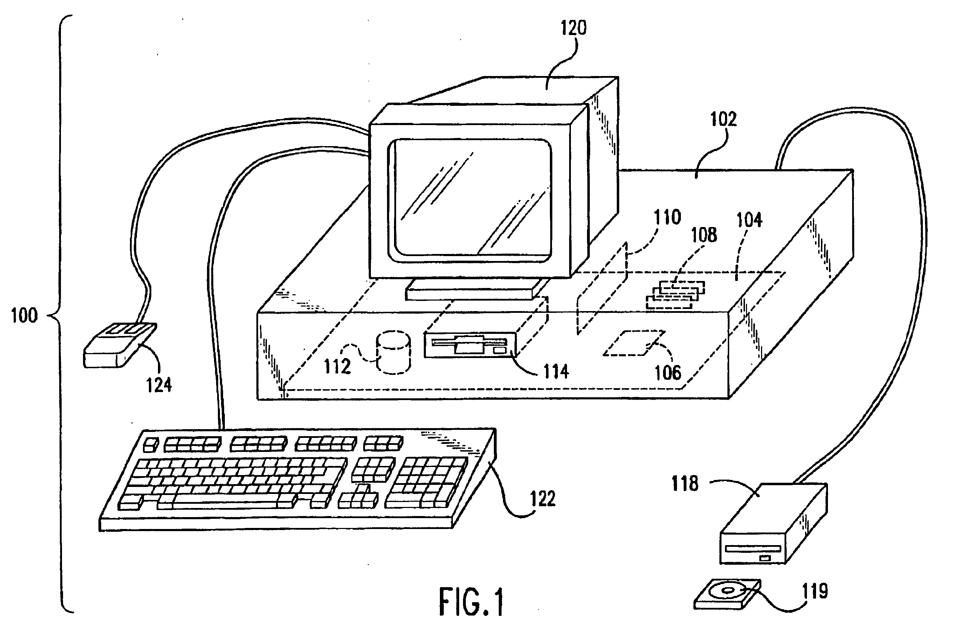

Referring now to the drawings, wherein like reference numerals designate identical or corresponding parts throughout the several views, Figure 1 is a schematic illustration of a computer system for managing a number of times that a consumer is exposed to information on a particular good, service or event. A computer 100 implements the method of the present invention, wherein the computer housing 102 houses a motherboard 104 which contains a CPU 106, memory 108 (e.g., DRAM, ROM, EPROM, EEPROM, SRAM, SDRAM, and Flash RAM), and other optional special purpose logic devices (e.g., ASICs) or configurable logic devices (e.g., GAL and reprogrammable FPGA). The computer 100 also includes plural input devices, (e.g., a keyboard 122 and mouse 124), and a display card 110 for controlling monitor 120. In addition, the computer system 100 further includes a floppy disk drive 114; other removable media devices (e.g., compact disc 119, tape, and removable magneto-optical media (not shown)); and a hard disk 112, or other fixed, high density media drives, connected using an appropriate device bus (e.g., a SCSI bus, an Enhanced IDE bus, or a Ultra DMA bus). Also connected to the same device bus or another device bus, the computer 100 may additionally include a compact disc reader 118, a compact disc reader/writer unit (not shown) or a compact disc jukebox (not shown). Although compact disc 119 is shown in a CD caddy, the compact disc 119 can be inserted directly into CD-ROM drives which do not require caddies. In addition, a printer (not shown) also provides printed listings of tracked events, services or goods.

As stated above, the system includes at least one computer readable medium. Examples of computer readable media are compact discs 119, hard disks 112, floppy disks, tape, magneto-optical disks, PROMs (EPROM, EEPROM, Flash EPROM), DRAM, SRAM, SDRAM, etc. Stored on any one or on a combination of computer readable media, the present invention includes software for controlling both the hardware of the computer 100 and for enabling the computer 100 to interact with a human user. Such software may include, but is not limited to, device drivers, operating systems and user applications, such as development tools. Such computer readable media further includes the computer program product of the present invention for tracking at least one of events, services and goods. The computer code devices of the present invention can be any interpreted or executable code mechanism, including but not limited to scripts, interpreters, static or dynamic link libraries, Java classes, and complete executable programs (e.g., written in Visual Basic, C, or C++).

A speed with which a buying decision is made is often based on an overall cost of the item being bought. As an example, if a consumer wants to buy a pack of cookies, the consumer quickly gets information on what the pack of cookies is by simply looking at the package. Then, essentially on impulse, the consumer decides whether or not to buy the pack of cookies. In such a case, there is relatively little need to store information related to the purchase (i.e., the pack of cookies). Purchases based on little or no additional information will be referred to herein as "impulse" purchases. Mcommerce or Mobile commerce is the world of instantaneous decision making processes with high synchronism (in regards with user experience) and prevalence of impulsiveness but no backup storage per se for memory.

However, if a consumer wishes to purchase a new electronic piece of equipment (e.g., a DVD player), a lot more information is required before the consumer is willing to make a decision. Examples of additional information that consumers often collect include: price, reliability of the goods, available options, and a comparison with similar goods on the market. Ecommerce or Electronic Commerce is the world of slow-paced decision where users browse the Web and gather as much information as they can before doing a purchase with the local capacity (hard drive) for temporarily storing the information. Purchases based on such additional information will be referred to herein as "reflective" purchases.

To most effectively target consumers, both impulse and reflective purchases must be facilitated. Although using Mcommerce or Ecommerce alone is possible, the goal of effective targeting is more readily achieved through a combination of Mcommerce and Ecommerce devices. The following description illustrates one embodiment of a system according to the present invention, but it intended to be illustrative only. Other embodiments are possible that still fall within the scope of the claims.

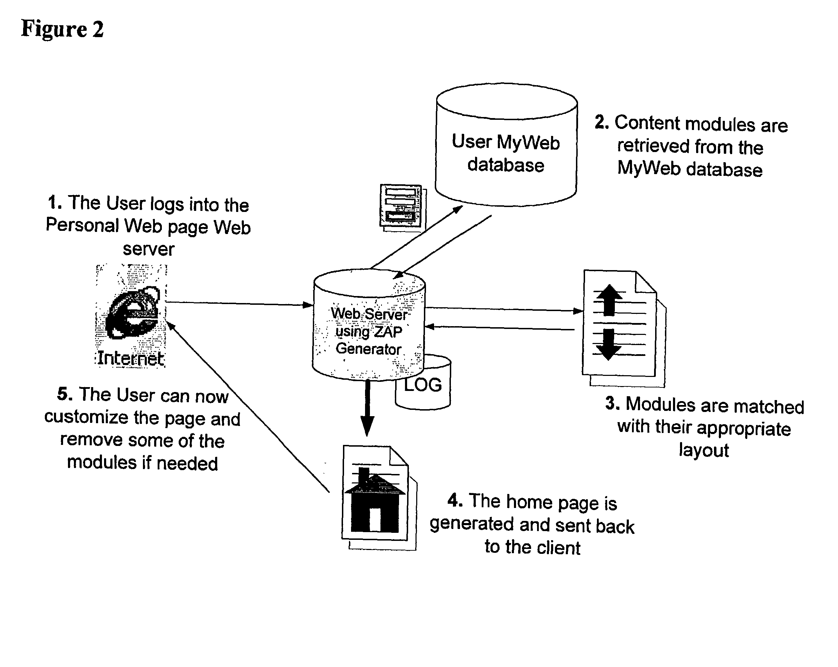

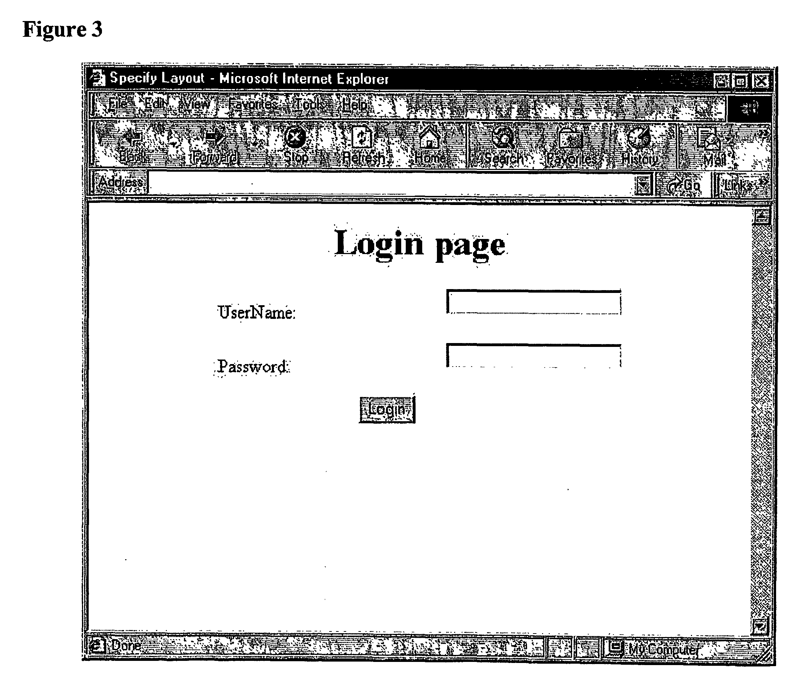

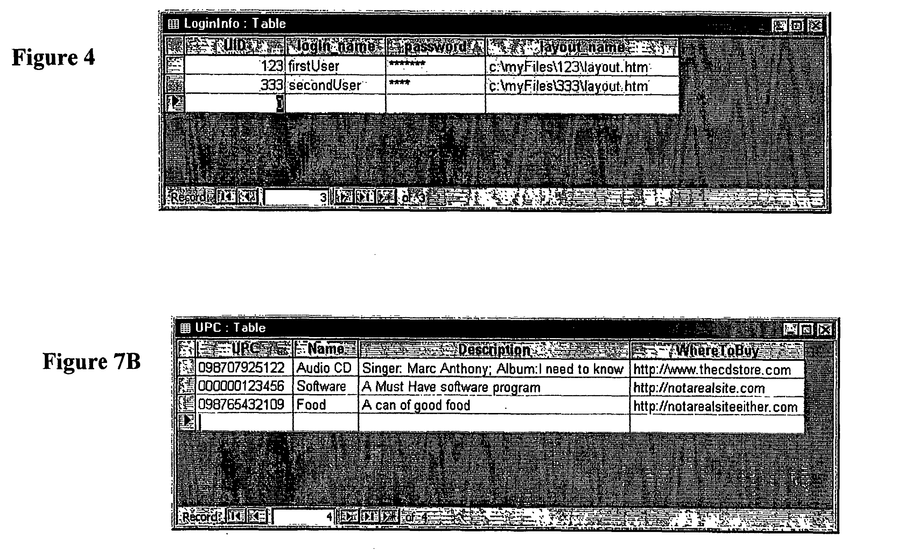

As shown in Figure 2, the present invention in directed to providing a user with personalized information relating to products and/or services in which the user is interested. To see that personalized information, a user logs into a web server that supports personalized information. To log in, a user specifies a URL that acts as an entry point for interacting with a web server. The web server then sends back a login interface (e.g., an HTML form or a Java Script) to the user which allows the user to input a user name and password (see e.g., Figure 3). When the user submits its user name and password (e.g., by selecting the "Login" button), the web server attempts to authenticate the user with the supplied information. The web server checks the supplied information against its records in a non-volatile storage (e.g., a flat file system or a database (see Figure 4)).

When the web server authenticates the user, the web server then retrieves corresponding content modules from the same or another non-volatile storage system. In the embodiment illustrated in Figure 2, the content modules are read from a database accessible by the web server. The web server then matches the content modules with a presently selected layout to dynamically generate a web page that is sent back to the user. As would be appreciated by one of ordinary skill in the art, the second and third steps of retrieving content modules and matching such modules to a specified layout can be combined in an alternate embodiment by storing the content modules and the layouts in a single location. Moreover, the web pages need not be generated dynamically (i.e., at the time the request is made). Instead, in another alternate embodiment the personalized web pages are generated semi-statically such that the web pages are regenerated when data changes and no corresponding delay is incurred when the user logs into the system. Having produced or read from a file a web page that represents the personalized information of a user, the web server sends the resultant web page to the user's web browser for display.

Since a user may wish to change the layout structure of his/her personalized web page, the present invention includes the ability to modify layout structures either using a separate layout page or using the personalized page directly. Such a manual configuration provides the user with the greatest control of his/her layout (e.g., themes (including colors and fonts) and categories) is referred to herein as a "static personalization" (e.g., layout) (as opposed to a layout "dynamically" generated by the system). This static personalization still provides dynamic content based on the zapped data.

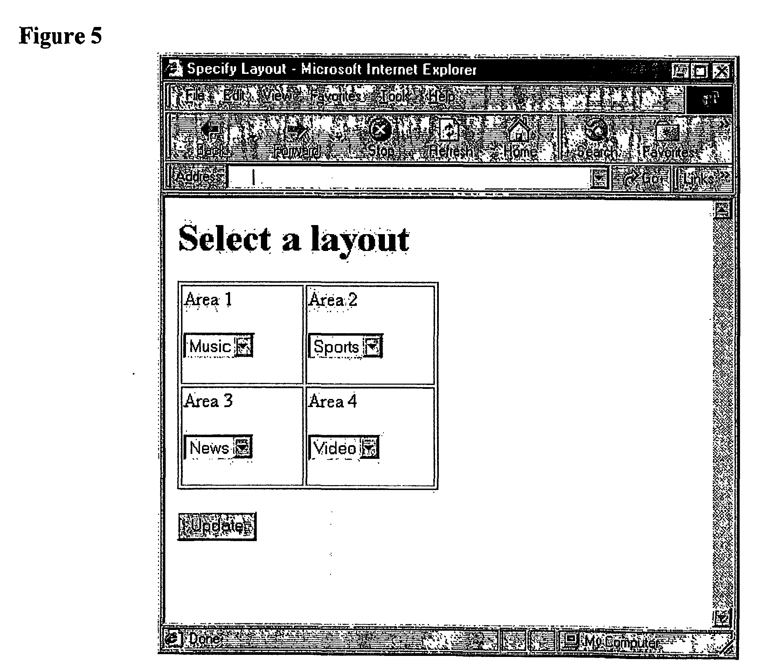

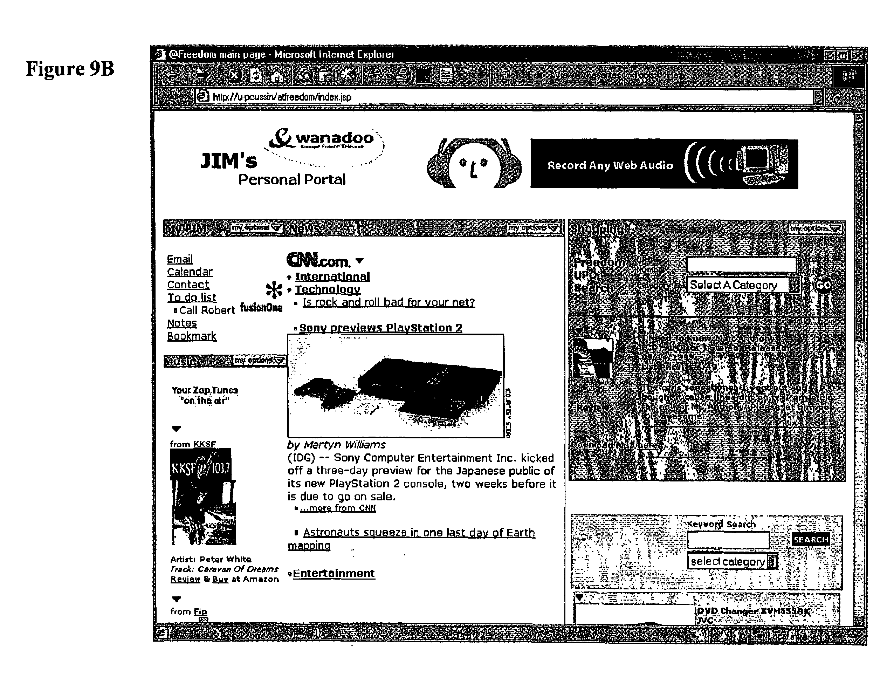

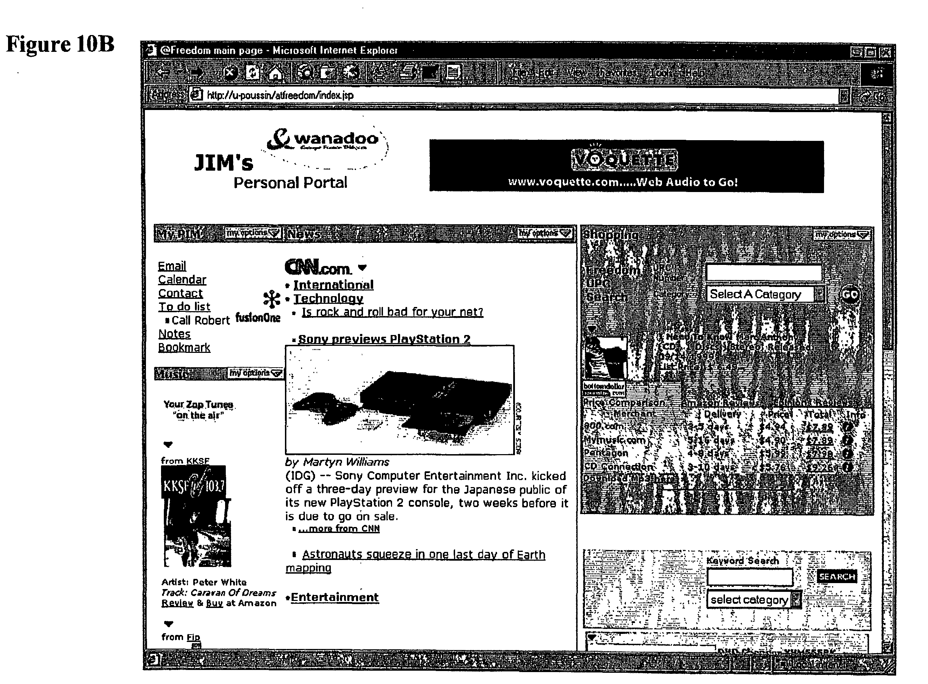

In an embodiment shown in Figure 5, the user selects the type of content that is to go into each area or portion of the web page. As is to be understood, the number and alignments of areas is intended to be specified flexibly such that many different configurations can be specified by the user. When a user has finalized the configuration, the user submits the configuration such that the web server can then show the personalized data in its new format. Such an interface may also be created using drag-and-drop techniques as well. As is shown in Figures 9B and 10B, the interface may also be modified directly while viewing a personalized page (instead of using a page only devoted to configuration).

Based on an analysis of previous impulses contained within a user profile, content (e.g., advertisements, incentives, and complementary information) similar to what was previously zapped is generated on the user's personal web page. One example of such an analysis is pattern recognition of a user's product (e.g., book) purchasing habits. Once at least one product (e.g., book in a subject area or genre) has been zapped, other similar products (e.g., books in the same area or genre) are presented as suggestions. (Such an information generation process is referred to hereinafter as "dynamic asynchronously generated information" because it is not based directly on previously zapped information.) The suggestions may be for the user or a known family member (e.g., girlfriend) and may be enhanced with discounts or other incentives.

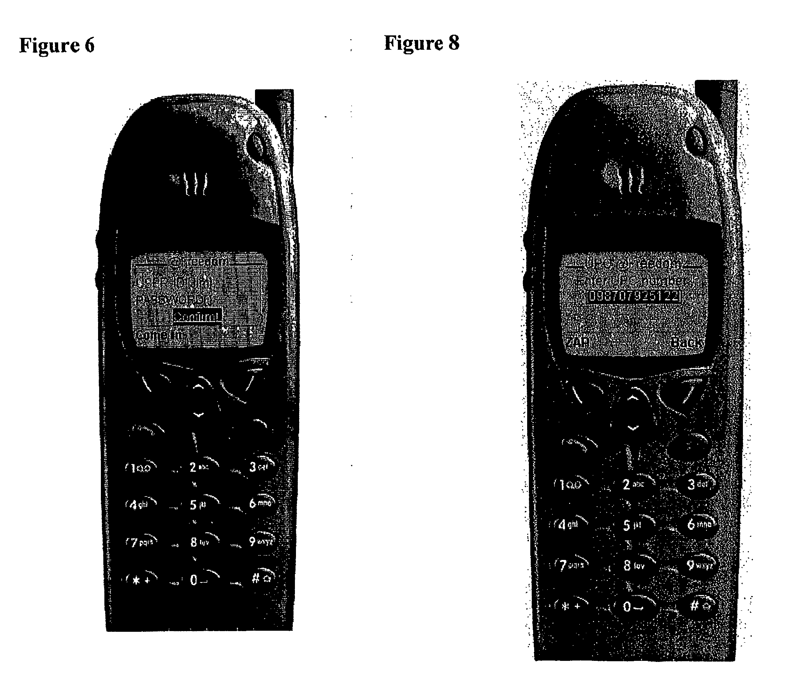

Turning now to the use of a mobile computation device (hereinafter "MCD") (e.g., a phone, a PDA or any WAP or Bluetooth device), the MCD utilizes a reduced set of features of the computer 100 above to enable the device to be portable. Accordingly, the sizes of the screen and input devices are reduced as compared to computer 100. An MCD is used to track information on products and services, a user also can log into his/her personalized account using his/her portable computation device. As shown in Figure 6, a user can input a user ID and password pair into a form (e.g., a WML-encoded form or a Java form) using the keys on a MCD. This pair is sent to the personalized web server which compares them to valid pairs, as was described above with reference to Figures 2-4.

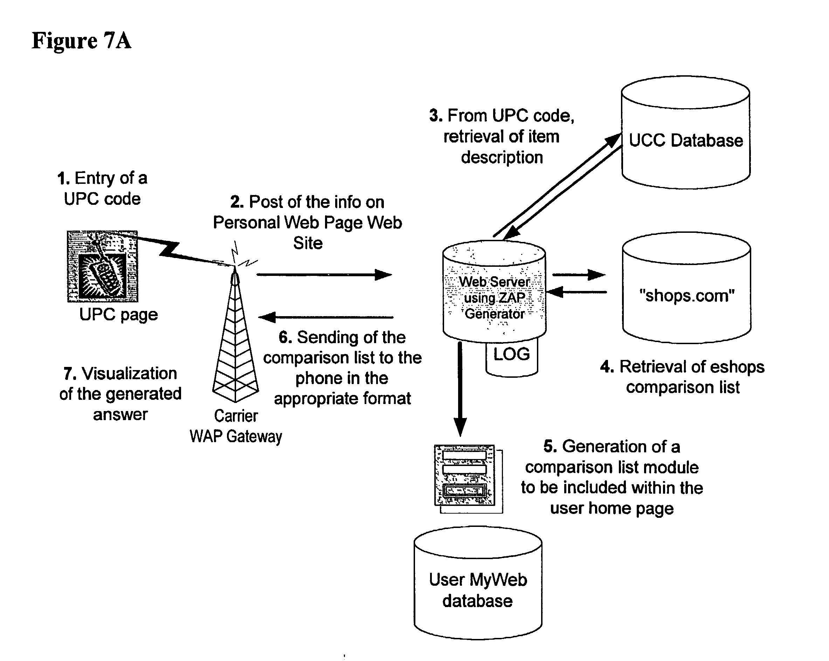

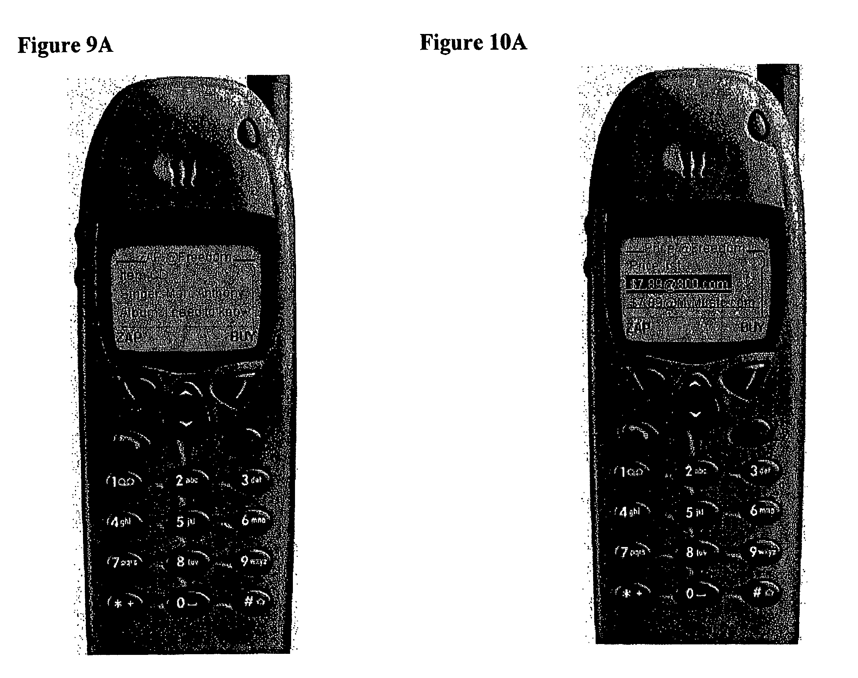

Once a user has logged in, the user may select information on a particular product or service. That request may result in either one or both of (1) a corresponding web page being updated, as shown generally in Figure 7A, or (2) a new web page being displayed on the MCD. To input a Universal Product Code (UPC) or other unique identifier, the web server sends to the MCD a second form page (e.g., a WML-encoded page) after a user is logged on. (The server may optionally track that the user is "logged on" for purposes of enabling others to communicate with the user (e.g., using chat or instant messaging).) Once the user has entered (either manually or using an automatic reader device (e.g., a barcode scanner)) the unique code (e.g., the 12 digits of the UPC number) that identifies the item or service, the user selects the send menu choice (labeled "ZAP" in Figure 8) to send the request. Using the communications connection of the MCD, the request is sent to the web server to which the user previously authenticated himself/herself. (If user requests are being logged, the UPC is written to non-volatile storage (e.g., a file or a database) to enable search statistics to be compiled.)

The web server then uses the UPC number as a search string that is passed to a UPC database (see Figure 7B). Information (e.g., a photograph, a brand, and a list price) about the corresponding item are extracted and gathered. (In a more generalized implementation, the database further includes the category of each item such that the web server knows which portion of the personalized web page to update.) At least a portion of the UPC or the retrieved information is then sent to an Internet price comparison engine and prices and shipment options are retrieved from e-retailers. All the data that is collected as a result of the query is aggregated and stored as a module within the User Web database for later display. However, an immediate response is sent back to the MCD using a WML template matched with the aggregated data for display on the MCD. The answer to the UPC request is received on the MCD, and the item characteristics, reviews and prices are displayed on the MCD.

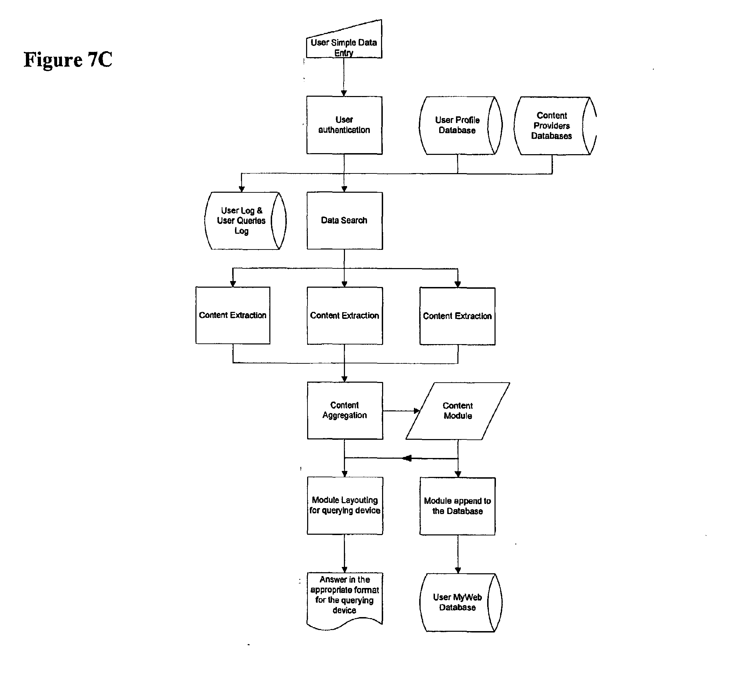

The process of Figure 7A can also be represented as a data flow diagram as shown in Figure 7C. Figure 7C illustrates that a search request may require extracting content or information from several places and recombining that information into a single page using a previously specified layout.

As described above, one of the many uses of the present invention is to facilitate purchases (e.g., CDs, books, software, groceries, electronics, cars) based on at least one of (1) a UPC and (2) brand and type (e.g., a model reference number). Information including product descriptions (e.g., brand, model, list price, key characteristics), product reviews, price comparison lists are retrieved from several e-retailers. The user is then given the option to purchase the item immediately or defer purchasing until later. Besides price, the buying information may be further extended to include other information such as available colors, quantities and locations.

As an example of how purchases can be made using a phone-based MCD, the UPC number shown in Figure 8 is sent (or "zapped") to a web server. The web server queries the database and determines that the UPC number corresponds to a CD by singer Marc Anthony. That information is sent to the MCD, as shown in Figure 9A. In addition, the user is given the opportunity to immediately buy the CD while the user's impulse to buy is still high. Selecting the "BUY" option sends another query to the Web server to find the prices for the CD. As shown in Figure 10A, the CD may be available from various locations, and the user is given the option of selecting from where to buy.

The user will not, however, always be convinced to buy on impulse. Instead, the user is provided with the option to buy again at a later time since the web server updates the user's page to include the information that the user requested. (The process of updating the user's web page as a result of zapped information directly is hereinafter referred to as "dynamic synchronous updating.") As shown in Figure 9B, the same information is shown in the Shopping section of the personal portal. The shopping list can further be supplemented to include a picture corresponding to the item being purchased (e.g., the cover of the album or CD). By selecting a portion of the information (e.g., the arrow, title or icon), the user is then able to receive pricing information on the item. An exemplary change in the web page is shown in Figure 10B. By selecting one of the purchase options, the user is able to complete the deferred purchase using the UPC number previously entered on the MCD.

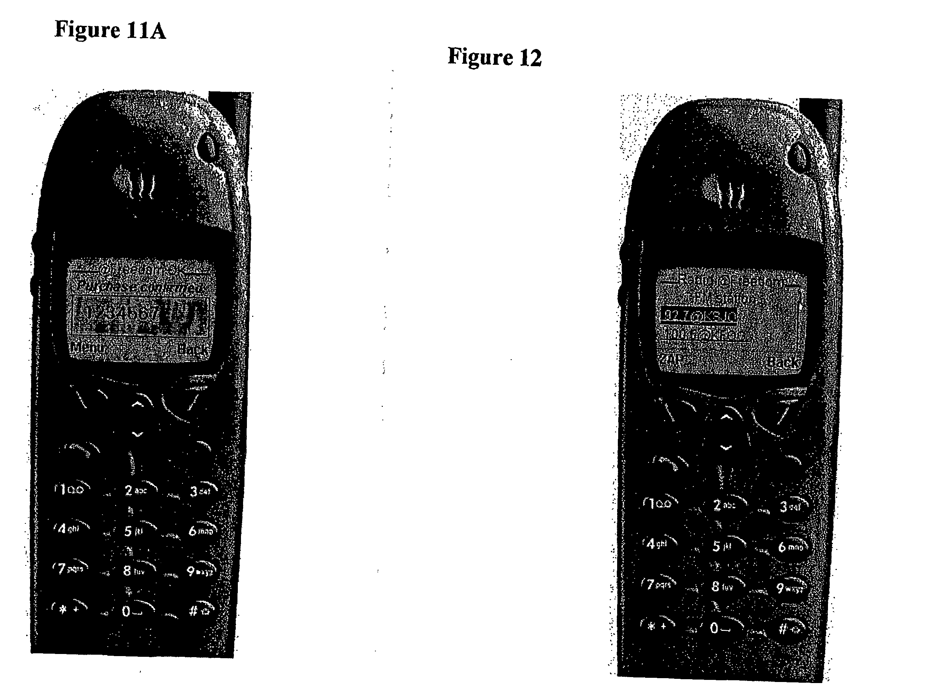

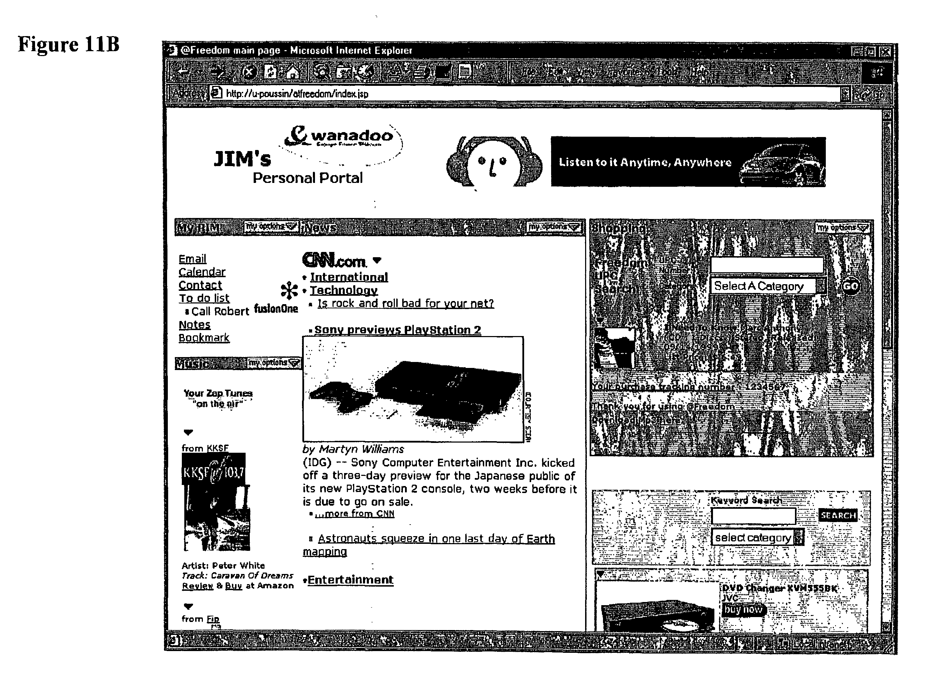

Once the user has purchased an item, at least one of the MCD interface and web interface are updated to reflect the purchase, as shown in Figures 11A and 11B. Both figures illustrate tracking numbers that can be used to track or modify the existing order.

One situation in which a user will know the UPC number is when a user wants to "try before you buy." Some stores include audio kiosks with headphones so that a customer can listen to a CD before buying. Although such kiosks are helpful, they are redundant for users who already are equipped with an audio-capable MCD. By entering a UPC number, a customer can listen to a song or song sample over the audio-capable MCD before having to purchase the CD. The CD can then be purchased (1) on impulse through the an audio-capable MCD or (2) at a later time using the web interface.

By facilitating a "try before you buy" attitude, many retail stores will inadvertently become showrooms for Internet distributors. Since often an Internet retailer is cheaper than a retailer, the retailer may begin to see an increase in the number of people coming in, trying and leaving to buy on the Internet. This may directly reduce sales. To avoid this sales loss, the retailer may support a "match that price" function which enables the MCD user to show a "best price" to the retailer so that the user can be charged an equivalent price by the retailer.

Alternatively, when a user selects that he is ready to purchase a product, the system of the present invention may also conduct a wide-ranging or limited reverse auction. That is, the system may request bids from a specified number of vendors (e.g., all vendors generally or only partners of the ISP). The bids will be displayed (preferably in a sorted order) such that the user can select from which vendor the product is to be purchased.

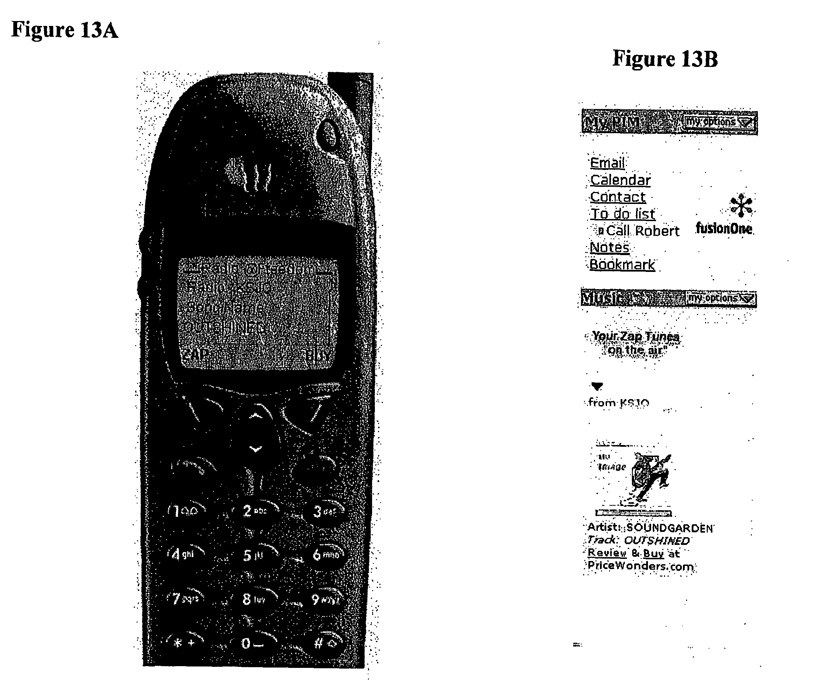

By integrating the portable device with external (substantially) real-time services, the device can also select information without knowing a UPC. For example, as shown in Figure 12, the user can request information about a song currently being broadcast (or recently broadcasted) on a radio station or a television station (e.g., MTV or VH1) based on the radio station frequency or the television station. This information may be available through a web page or another information services API. As a result, the MCD interface is updated to show the song information as shown in Figure 13A. The same request also updates the web interface to include the name of the current song in the "Music" area of the user's web page, as shown in Figure 13B. Similarly, a user can establish immediate and deferred purchasing options (i.e., buying or renting a DVD/K7) for the film currently broadcasted on TV based on the TV station number or the GemStar PlusCode recording code. Additional codes (e.g., codes by GoCode and DigitalConvergence) can be used to update a user's personalized page. Exhibit numbers can also be added at conferences to enable conference attendees to go back and view either the exhibit in its entirety or exhibit sub-parts uniquely identified within the exhibit.

The portable device also can be used for information assistant services. In one such embodiment, the user is given the option of immediate and deferred retrieval of information (e.g., news) based on a specific headline that was sent (or "pushed") to the MCD. The user can ask for additional amounts of information on a specific news event and consult the information later on the personalized web page. In addition, the user can request additional information about a news story that is being announced or discussed on a radio station.

Information services also include immediate and deferred information for tracking a specified travel arrangement (e.g., airline trip) based on the reservation or confirmation number, where the information can include any one or a combination of departure date, departure time, departure city and arrival city.

The personal web page can optionally be augmented with personal information services (e.g., calendar, contacts, notes, agenda). In one embodiment, the user inputs short notes (like sticky notes or voice notes) on the audio-capable MCD for further processing when the user is back in front of a browser. In another embodiment, the MCD and web interface provide reminders of an appointment based on the date and time. Also, another information service is reverse look-up of phone numbers with the option to add a contact name based on the phone or ICQ number.

Although the above description has been provided in the context of a single user updating a single page, it is to be understood that different data requests (e.g., UPC number searches) by a single user can update different pages. For example, video and music may be on one page while sports and health are on another. Such a configuration is established using user preferences.

Users may also update shared pages using their wireless devices. For example, if a user sees a product that his/her spouse would be interested in, the user would select an option key on the wireless device to send (or Zap) the information onto the spouse's page. Such a configuration also can be used to update a group page by any authenticated member of the group.

As would be appreciated by one of ordinary skill in the art, the unique identifiers need not be UPC numbers. Other identifiers include billboard numbers, VCR time codes, stock codes and people codes (e.g., social security numbers). The search interface also need not be numeric. The search interface can be based on any language and any input device. Exemplary input devices include keyboards, mice, voice and barcodes.

The above described purchase and information services were considered to be position-independent services. That is, the user's current position did not affect how the services were rendered. However, with the addition of a GPS service, it is possible to provide context-based services. For example, location is important because radio frequencies are reused between cities. A user may not know the name of the radio station he/she is currently listening to, but the user can quickly determine the frequency simply by looking at the radio dial. Using GPS services, the user can determine or select the appropriate station corresponding to the radio station that is tuned in.

Another service which combines data from several products is a restocking service that enables an information input device to identify the quantity and type of a category or type of product (e.g., groceries or laundry) remaining at a location (e.g., home). That information is zapped to a service provider which restocks the associated products (e.g., new groceries or clean shirts). Other information collection and combination services can also aggregate data prior to zapping the aggregated data.

To facilitate the broadest range of additions to the information in the personal web pages, the present invention includes an API for receiving messages from third-party applications. Such messages include requests to update subject areas (or define new subject areas). In this fashion, a third-party calendaring program can easily integrate a new appointment with the rest of a user's personal information.

For those applications that do not know to use the API of the present invention, it is possible to specify how the web server should be programmed to extract information from web sites programmatically. In one embodiment, a URL with the information to be extracted is identified by the layout, and a script (e.g., a CGI script, a Perl script, an Active server page script or a Java server page program) is run to extract HTML-, XML- or text-formatted information. One such use of this technique is for reading the XML or HTML output of a web page which specifies a song currently being played on a particular radio station. Another use of the programmatic parsing is to aggregate prices obtained from price comparison engines.

Another use of the present invention is with Bluetooth-enabled appliances (e.g., a Bluetooth/WAP VCR). Such a VCR, which could include a simple server (e.g., a WAP server), would utilize a MCD's microbrowser and program it to record a specified program (e.g., next week's episode of a sit-com). Unlike a traditional remote control, the access to the VCR could be done virtually from anywhere. If the VCR does not embed a server, the Bluetooth mobile MCD can be used as a remote control in a 10 meters space. In this context, additional content (e.g., like previews, reviews, actors casting of the next weeks's episode) can be zapped to the Personal Web Page.

Similarly, a BlueTooth compliant stereo system can update the Personal Web Page with information about the current broadcast (song, talk-show, ad). In any scenario where two Bluetooth and Web-enabled home appliances can exchange information between one another (e.g., hi-fi stereo and TV) the present invention can facilitate communication between the appliances and enable the enrichment and aggregation of information.

Technology such as speech recognition offers now good speech-to-text feature. Dictation of continuous speech is now technically available on PC but remains difficult to implement on a traditional phone device. However, the present invention can accept voice memos (e.g., encoded in wav or .mp3 formats) for storage in the mobile device or upload to a task list or memo list on the Personal Web Page.

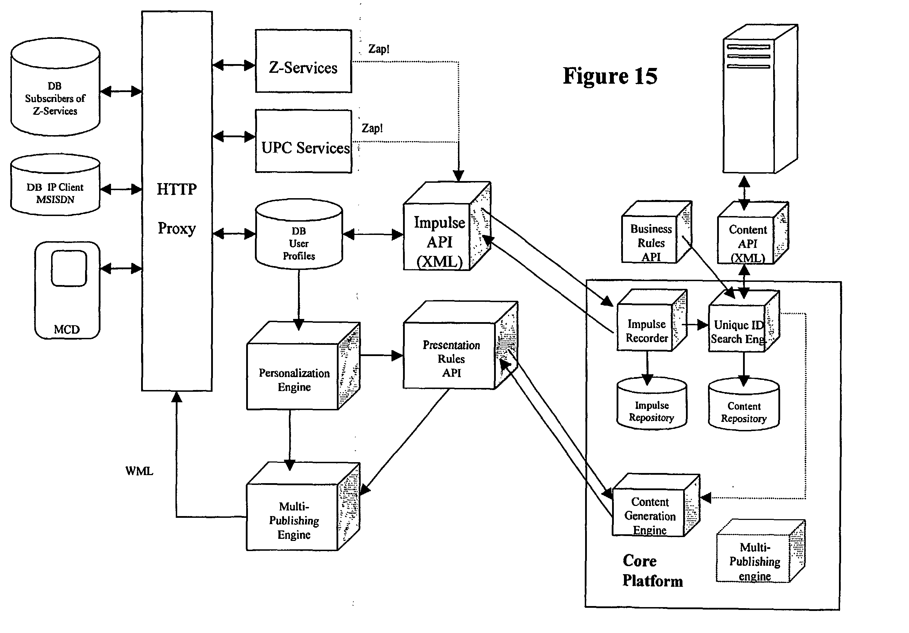

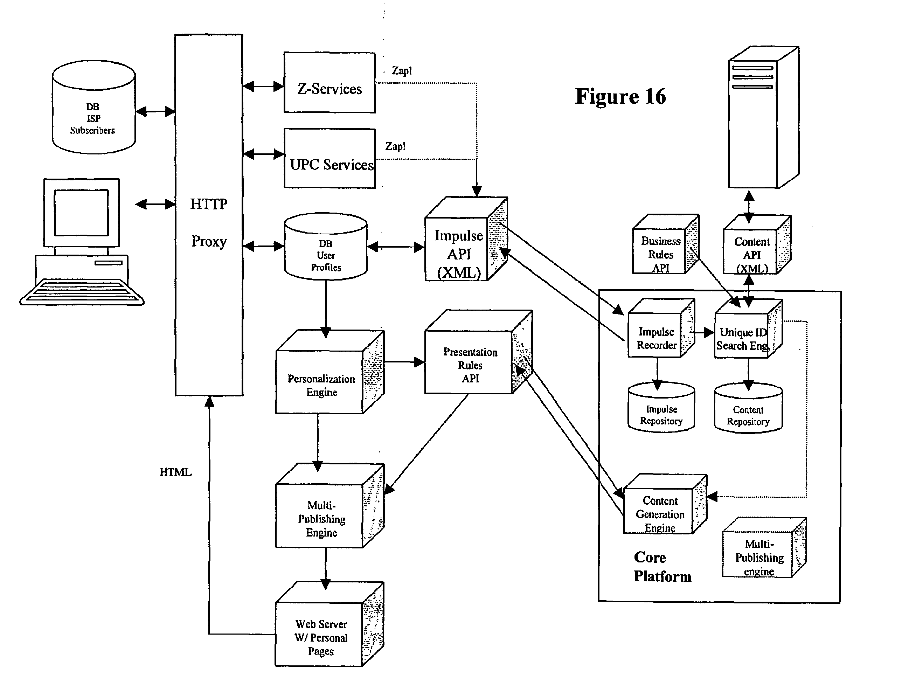

Turning now to the system of Figure 15, a mobile device can be used to collect information about events tracked when using the mobile device. Preferably, the user selects the company that it wishes to track its activities (that may or may not be the same company that provides the wireless mobile connectivity). An exemplary tracking session is described with respect to the seven steps detailed below.
1. In the context of a MCD session, the user is first authenticated from a user database. Then, the user can access services enhanced with the ZAP feature (hereinafter "Z-Services") like the news or a Zap service labeled "@Freedom UPC service" based on UPC codes.
2. In both cases, the ZAP impulse or ZAP Identification (ZIP) is sent to the core platform via an the impulse API. (The format of the impulse can be either binary or text (e.g., using a self-describing format such as XML).) The ZIP impulse (e.g., composed of the user ID, the Item ID, a time stamp, a location stamp, a vendor ID and refinement degree) is then recorded into the impulse repository and potentially duplicated into the I-Services user profile database. (In an embodiment in which an impulse is sent to someone from someone or something else, the impulse includes a destination identifier and optionally a source identifier. In such an embodiment, the user may select a set of filtering rules (e.g., based on the source identifier or an impulse category) to prevent being bombarded with unwanted or inappropriate impulses.)
3. Based on the Item ID, content is gathered from the content providers partners and stored as raw data into the content repository.
4. Based on personalization rules provided potentially by a personalization engine (e.g., like Broadvision) and user preferences, content is generated in XML by the content generation engine, cross-referencing the raw data gathered. Such content may include a set of objects (active, passive, or a combination) bound together as a single item. One embodiment of a set of objects is known as a "portlet".
5. The content is then sent back to the legacy multi-publishing system, enriched with contextual content and advertisements form the personalization engine and generated in the appropriate format for the terminal (WML in this case).
6. The reply is sent back to the MCD
7. The impulse being stored, the content will also be retrieved from another device, as described more fully with respect to Figure 16.

Although the messages (e.g., requests ans responses) in system of Figure 15 (and Figure 16 described below) are illustrated as passing between the personalization and multi-publishing engines outside of the "core platform," it is to be understood that the present invention is not so limited. As shown in dashed lines inside the core platform, those components may reside inside the "core platform" as well. Indeed, the location of each component within the system may be distributed from every other component without departing from the scope of the present invention. In fact, the illustrated components of the present invention each have utility independently of the other components. Accordingly, it is to be understood that the present invention encompasses the use of each component, either alone or in combination with any number of the other illustrated components.

Once data has been gathered and the Personal Web page updated with information about events/things of interest to the mobile user, the user will often with to review that information. An exemplary review process is discussed with reference to Figure 16 and the six steps below. Generally, in the context of a Web session, the user wants to access her/his personal home page on an Internet Service Provider or Web Hosting service (e.g., Itineris.com). However, how the data is accessed and displayed may be system specific but is preferably system independent. Such independence facilitates the use of any one of several engines that conform to a services interface. Thus, e-merchants may be able to work with a preferred engine or engines while retaining the flexibility to build customizable engines according to the interface (for use alone or with other vendors' engines). Such service shows the modules automatically aggregated and the personalization options of the I-services portfolio.
1. The user is first authenticated from the I-Services Database.
2. The request is sent to the core platform. The viewing demand can potentially be recorded as an impulse.
3. The raw data is retrieved from the content repository, eventually updated for most recent changes with content providers' data.
4. Based on personalization rules provided potentially by an personalization engine (e.g., Broadvision) and the user preferences, content is generated in XML by the content generation engine, cross-referencing the raw data.
5. The content is then sent back to the legacy multi-publishing system, enriched with contextual content and advertisements form the personalization engine and generated in the appropriate format for the terminal (HTML in this case).
6. The reply is sent back to the Web Browser.

As discussed above, the display of update information to the user can occur at the request of the user (i.e., synchronously to a user's web browser request). The visual update of the user's display can also occur semi-asynchrounously by utilizing a browser (or other program) that intermittently re-requests the Personal Web page (or a portion (e.g., sub-frame) thereof) when the Personal web page is displayed. Moreover, it is possible to update the display asynchrounously by utilizing a browser (or other program) that receives "pushed" information from services that contain information of interest to the user. (Since such an embodiment using push technology encompasses both pushed web pages or other information, such information is referred to hereinafter as "pages of dynamic content.") Such pushed information may either update the entire page of dynamic content or just a portion thereof.

Impulse information may also be sent as part of real-time information exchange. For example, using an instant messaging service one user may send another user an impulse. Impulses may also arrive as part of a multimedia stream arriving at the user's location from a remote location.

The above discussion has generally focused on a semi-connected environment in which impulses may be transmitted and received at any time. It is possible, however, to use the present invention in a disconnected mode where impulses are stored until connectivity is re-established (e.g., by (1) manually or periodically re-enabling communications or (2) plugging the MCD into a network card).

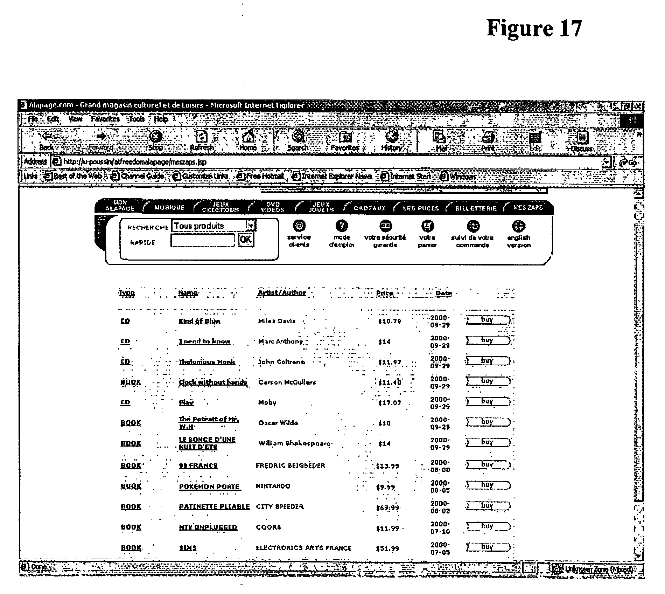

To prevent a user's Personal Web page from becoming overly cluttered, the amount of information on recently referenced products is preferably limited. In such an embodiment, the user may select "Recent information" to obtain a list of recently "zapped" products or services. An exemplary list is shown in Figure 17. Moreover, an expandable tree or similar interface control can group together older information to also reduce clutter.

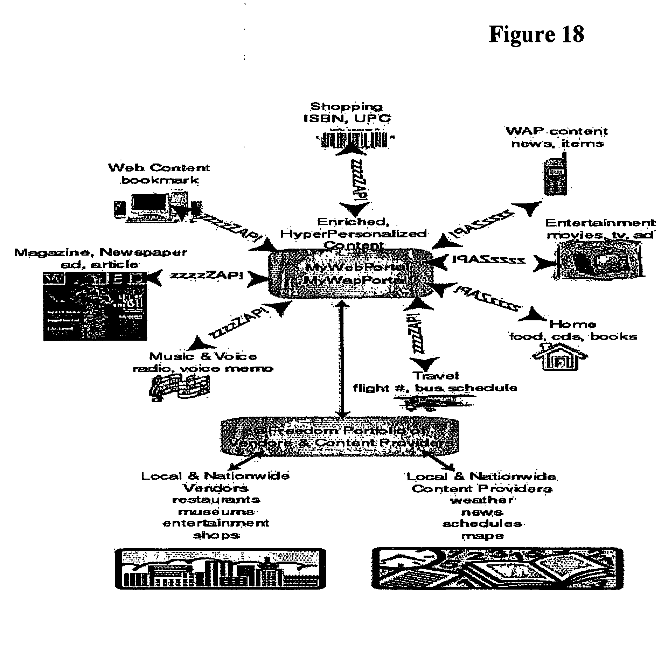

Impulses are not associated only with products (e.g., remembered for informational and/or purchasing purposes) but may be associated also with advertising, stories, news and the web in general, as shown in Figure 18. Moreover, when utilizing web-impulses, activities on a first site may trigger the sending of impulses to at least one other site. For example, when a user buys a ticket at an online vendor selling concert tickets, a message may be sent to the vendor's affiliates to indicate for which concert the user purchased a ticket. The affiliates can then process the information and send impulses to the user's web site for related goods and thus, generate portlets on the user personal portal. A first affiliate may attempt to cross-sell a CD while a second affiliate may attempt to sell apparel. (In the context of affiliates using a single information engine, the purchase may simply trigger a series of shared rules that send an impulse for each matched rule.)

It is preferable that all cross-selling rules only result in the transmission of impulses such that a user may protect his/her web page using filters, as described above. A consistent messaging interface also reduces the likelihood that affiliate programs will inadvertently corrupt a user's personal web page. However, in an alternate embodiment, rather than sending impulses, it is possible to use an engine that shares access to a user's personal web page to update the user's page directly.

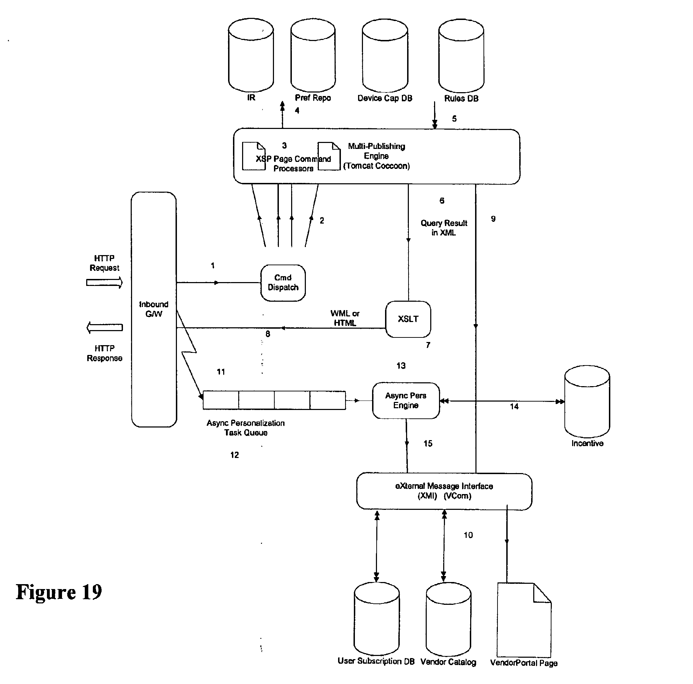

Turning now to the message diagram of Figure 19, information can be passed between components of the present invention in at least three phases: (1) a browser synchronous loop, (2) an inter-system message path, and (3) an asynchronous personalization loop. Each of those phases is described in additional detail below with reference to the step number shown on the figure.

In the Browser Synchronous Loop, an HTTP Request from web or phone browser results in an immediate personalized response according to the following steps:
1) The Incoming Gateway (e.g., an HTTP Gateway) extracts headers (e.g., HTTP headers including user-agent headers) which include all the information pertaining to the Zap initiated by the user via the web browser or MCD (e.g., phone browser).
2) The Gateway then creates a Java Bean which contains all the relevant info and sends the command to the Command Dispatcher, which is responsible for invoking the appropriate XSP page to execute the command.
3) The invoked XSP Page executes the command.
4) The XSP page may need to access data from one or more data repositories each accessible via a corresponding Service Provider using a database API (e.g., JDBC SQL Query to an SQL database).
5) The query returns a Result Set (e.g., a JDBC result set) which contains the results of the invoked query.
6) The Result Set is parsed into row and column elements and marked up as with formatting or structure tags (e.g., XML tags) by the Multi-publishing Engine and then a style sheet is applied to it.
7) A style sheet is applied by a transformer/filter (e.g., an XSLT-transformer) to generate content with the proper markup depending on the user-agent header in 1). The user-agent header identifies the kind of browser that is used and a style sheet appropriate for the browser is applied. The generated content is returned to the Gateway.
8) The Gateway packs the result into a response (e.g., an HTTP response) object and sends it back to the browser that generated the Request.

The system further includes an inter-system message path. In 4) above a Service Provider may be remote in which case a remote query will need to be initiated. The Cmd Processor will return formatted or structured data (e.g., XML data) meant for a remotely deployed Service Provider. Then, steps 9) and 10) are performed. They are:
9) The XML is packed as a payload for a SOAP encoded system message and is handed to the eXternal Message Interface XMI or (Vcom)
10) Depending on the message it may or may not return a value.

Finally, the system finishes an asynchronization personalization loop. Along with the immediate personalization that is done when a user generates a request, some personalization is done in the background asynchronously, after the completion of the user request. This is done by the Gateway initiating a task in a queue which contains similar tasks from other requests. Steps 11 through 14 below describe such a process including:
11) Before step 8) above, the G/W injects an async personalization task into the Async Personalization Task Queue.
12) The Async Personalization Engine pulls a task from the queue whenever one is available and the engine is free. Tasks may pile up if the engine is running slowly and tasks are coming in quickly. Alternatively the engine may be working fast and tasks may be coming in relatively slowly. In this case the engine may spend time waiting for new tasks. All this depends on number of simultaneous users of the system and hence system load.
13) The Async Personalization Loop uses knowledge of the specific user's buying behavior to generate specific incentives. The engine runs a series of rules based on the user purchasing history from an incentive rules database and generates an incentive encoded as an XML template. The template contains enough information for a small chunk of HTML to be generated and appended to a user's home page. The HTML contains language explaining the specific incentive.
14) This template XML is communicated to the external entity (e.g., such as a Portal Page) via SOAP using XML over HTTP.

Obviously, numerous modifications and variations of the present invention are possible in light of the above teachings. It is therefore to be understood that, within the scope of the appended claims, the invention may be practiced otherwise than as specifically described herein.

## Claims

1. A computer program product, comprising:
a computer storage medium and a computer program code mechanism embedded in the computer storage medium for causing a computer to remotely update a personalized web page based on at least one of a product information request and a service information request, the computer program code mechanism comprising:
a first computer code device configured to receive a unique identifier for at least one of a product information request and a service information request from a remotely located computing device;
a second computer code device configured to search for information corresponding to the at least one of a product information request and a service information request;
a third computer code device configured to update a personalized web page of a user of the remotely located computing device with at least a first portion of the information found by the second computer code device.

2. The computer code device as claimed in claim 1, wherein the remotely located computing device comprises a mobile computation device.

3. The computer code device as claimed in claim 2, wherein the mobile computation device comprises a portable WAP device.

4. The computer code device as claimed in claim 1, wherein the portable WAP device comprises a portable WAP phone.

5. The computer code device as claimed in claim 1, further comprising a fourth computer code device configured to transmit the personalized web page to a web browser on a remote computer.

6. The computer code device as claimed in claim 5, further comprising a fifth computer code device configured to authenticate a user of the web browser prior to transmitting the personalized web page to the remote computer.

7. The computer code device as claimed in claim 1, further comprising a fourth computer code device configured to transmit a second portion of the information to the remotely located computing device.

8. The computer code device as claimed in claim 7, wherein the first portion is larger than the second portion.

9. The computer code device as claimed in claim 1, wherein the unique identifier comprises a Universal Product Code.

10. The computer code device as claimed in claim 1, further comprising a fourth computer code device configured to receive a current location of the remotely located computing device, wherein the unique identifier comprises (1) the current location of the remotely located computing device and (2) at least one of a radio station identifier and a television station identifier.

11. The computer code device as claimed in claim 1, wherein the third computer code device comprises a fourth computer code device configured to merge an information layout and information into the personalized web page.

12. The computer code device as claimed in claim 1, wherein the third computer code device comprises a fourth computer code device configured to include in the personalized web page a hyperlink configured to order a product or service corresponding to the at least one of a product information request and a service information request, respectively.

13. The computer code device as claimed in claim 1, wherein the unique identifier comprises at least one of a radio station identifier and a television station identifier.

14. The computer code device as claimed in claim 13, wherein the second computer code device comprises a fifth computer code device configured to access a web site of a radio station or television station corresponding to the at least one of a radio station identifier and a television station identifier, respectively, for parsing out the information.

15. The computer code device as claimed in claim 1, wherein the unique identifier corresponds to at least one of a compact disc (CD) and a digital versatile disc (DVD).

16. The computer code device as claimed in claim 1, wherein the remotely located computing device comprises a WAP device integrated into a vehicle.

17. In a WAP-compliant device carried by a user, the improvement comprising:
a unique id receiver for receiving a unique ID; and
a wireless transmitter for sending the unique ID to a server managing a personal web page of the user while the user is away from a computer of the user.

18. The WAP compliant-device as claimed in claim 17, wherein the unique id receiver comprises a set of telephone keys.

19. The WAP compliant-device as claimed in claim 17, wherein the unique id receiver comprises a barcode reader.
